# EUROPÄISCHE PATENTANMELDUNG

(11) **EP 4 145 022 A1**
(43) Veröffentlichungstag der Anmeldung: **08.03.2023**
(21) Anmeldenummer: 22193179.3
(22) Anmeldetag: 31.08.2022
(51) Int. Cl.: F16H 61/30, F15B 11/12

(54) **DREISTELLUNGSSCHALTMODUL**

(30) Priorität: 01.09.2021 DE 102021209598
(71) Anmelder: ZF Friedrichshafen AG, 88046 Friedrichshafen (DE)
(72) Erfinder: Winkler, Maximilian, 94508 Schöllnach (DE)

(57) **Zusammenfassung**

Die Erfindung bezieht sich auf ein Dreistellungsschaltmodul mit einer Schaltstange 13, die in eine erste, eine zweite und eine dritte Schaltstellung axial verschiebbar ist und auf der eine Schaltgabel 29 fest angeordnet ist, wobei die Schaltstange 13 von einem einseitig druckmittelbeaufschlagbaren ersten Schaltkolben 23 sowie von einem in gleiche Beaufschlagungsrichtung wie der erste Schaltkolben 23 einseitig druckmittelbeaufschlagbaren zweiten Schaltkolben 20 entgegen einer Federkraft axial bewegbar antreibbar. Dabei ist der erste Schaltkolben 23 in einem ersten Schaltzylinder 1 und der zweite Schaltkolben 20 in einem zum ersten Schaltzylinder 1 koaxialen zweiten Schaltzylinder 5 verschiebbar angeordnet. Die Schaltkolben 20, 23 weisen zumindest annähernd gleiche Druckwirkflächen auf und der erste Schaltkolben 23 weist eine koaxiale Durchgangsöffnung 24 auf, mit der er abgedichtet axial verschiebbar auf der Schaltstange 13 geführt ist und die Schaltstange 13 eine koaxiale Öffnung 9 in einer den ersten Schaltzylinder 1 vom zweiten Schaltzylinder 5 trennenden Trennwand 7 durchragt. Mit einem an der Schaltstange 13 in einem Abstand vom dem zweiten Schaltkolben 20 angeordneten Anschlag 27, dessen radiale Erstreckung kleiner als die radiale Erstreckung der koaxialen Öffnung 19 der Trennwand 7 und größer als die radiale Erstreckung der Durchgangsöffnung 24 des ersten Schaltkolbens 23 ist.

## Beschreibung

Die Erfindung bezieht sich auf ein Dreistellungsschaltmodul mit einer Schaltstange, die in eine erste, eine zweite und eine dritte Schaltstellung axial verschiebbar ist und auf der eine Schaltgabel fest angeordnet ist, wobei die Schaltstange von einem einseitig druckmittelbeaufschlagbaren ersten Schaltkolben sowie von einem in gleiche Beaufschlagungsrichtung wie der erste Schaltkolben einseitig druckmittelbeaufschlagbaren zweiten Schaltkolben entgegen einer Federkraft axial bewegbar antreibbar ist und wobei der erste Schaltkolben in einem ersten Schaltzylinder und der zweite Schaltkolben in einem zum ersten Schaltzylinder koaxialen zweiten Schaltzylinder verschiebbar angeordnet ist.

Durch ein derartiges Dreistellungsschaltmodul für Fahrzeuge ist z.B. eine Gangschaltung eines Schaltgetriebes in drei Schaltstellungen schaltbar.

Aufgabe der Erfindung ist es ein Dreistellungsschaltmodul der eingangs genannten Art zu schaffen, das in Bezug auf die radiale Erstreckung ausreichend große Kolbenkräfte zur sicheren Schaltbewegung aufweist.

Diese Aufgabe wird erfindungsgemäß dadurch gelöst, daß die Schaltkolben zumindest annähernd gleiche Druckwirkflächen aufweisen und der erste Schaltkolben eine koaxiale Durchgangsöffnung aufweist, mit der er abgedichtet axial verschiebbar auf der Schaltstange geführt ist und die Schaltstange eine koaxiale Öffnung in einer den ersten Schaltzylinder vom zweiten Schaltzylinder trennenden Trennwand durchragt, mit einem an der Schaltstange in einem Abstand vom dem zweiten Schaltkolben angeordneten Anschlag, dessen radiale Erstreckung kleiner als die radiale Erstreckung der koaxialen Öffnung der Trennwand und größer als die radiale Erstreckung der Durchgangsöffnung des ersten Schaltkolbens ist.

Die Druckbeaufschlagung der Schaltkolben erfolgt vorzugsweise pneumatisch.

Bei dieser Ausbildung befinden sich die beide Schaltkolben bei Nichtdruckbeaufschlagung unter der Wirkung der Federkraft in ihrer eingefahrenen Stellung und damit die Schaltstange und die Schaltgabel in einer ersten Schaltstellung.

Erfolgt eine Druckbeaufschlagung des ersten Schaltzylinders und damit des ersten Schaltkolbens, so bewegt dieser sich entgegen der Federkraft in seine ausgefahrene Stellung, wobei er über den Anschlag auch die Schaltstange mit dem zweiten Schaltkolben und damit die Schaltgabel in ihre zweite Schaltstellung bewegt.

Erfolgt zusätzlich zur Druckbeaufschlagung des ersten Schaltkolbens auch eine Druckbeaufschlagung des zweiten Schaltzylinders und damit des zweiten Schaltkolbens, so wird dieser aus seiner zweiten Schaltstellung sich weiter in seine ausgefahrene dritte Schaltstellung und damit auch die Schaltstange und die Schaltgabel in ihre dritte Schaltstellung bewegt.

Da der erste Schaltzylinder bereits mit Druckluft beaufschlagt ist, ist nur noch das Luftvolumen für den zweiten Schaltzylinder von einer Druckluftquelle aufzubringen.

Durch die relativ große Druckwirkfläche und damit großen Kolbenkräfte des zweiten Schaltkolbens kann eine sichere Schaltung in die dritte Schaltstellung erfolgen, obwohl in dieser Schaltstellung die Rückstellkraft der Federkraft am höchsten ist.

Beim Zurückschalten aus der dritten Schaltstellung in die erste Schaltstellung durch Lüften des zweiten Schaltzylinders kann der Druck in dem ersten Schaltzylinder beibehalten werden, so daß kein Schaltzeitverlust durch vorheriges Entlüften des ersten Schaltzylinders entsteht. Der mit Reibschluß auf der Schaltstange angeordnete erste Schaltkolben bleibt dabei in seiner ausgefahrenen Schaltstellung. Erst nach Erreichen der eingefahrenen Stellung des zweiten Schaltkolbens kann dann der erste Schaltzylinder entlüftet werden.

Somit kommt es auch nicht zu störenden Geräuschen durch ein Anschlagen des ersten Schaltkolbens in seiner ersten Schaltstellung.

Auch wird ein Überschwingen der Schaltstange beim Schalten von der dritten Schaltstellung in die erste Schaltstellung durch das spätere Bewegen des ersten Schaltzylinders in die erste Schaltstellung vermieden.

Der erste Schaltzylinder kann axial durch die Trennwand und eine der Trennwand in einem Abstand gegenüberliegende Bodenwand begrenzt sein, die eine koaxiale zweite Durchgangsöffnung aufweist, durch die die Schaltstange abgedichtet verschiebbar hindurchgeführt ist.

Dabei kann bauraumreduzierend eine vorgespannte Schraubendruckfeder die Schaltstange mit radialem Abstand umschließen, die mit ihrem einen Ende auf der dem erste Schaltzylinder abgewandten Seite der Bodenwand abgestützt ist und mit ihrem anderen Ende die Schaltgabel oder die Schaltstange kraftbeaufschlagt.

Zu einer einfachen Montage des Dreistellungsschaltmoduls führt es, wenn die Schaltstange aus einem ersten Schaltstangenteil und einem damit koaxial verbundenen zweiten Schaltstangenteil besteht, wobei der zweite Schaltstangenteil den zweiten Schaltkolbenteil trägt.

Bauteilsparend kann dabei der Anschlag an dem zweiten Schaltstangenteil angeordnet sein, insbesondere, wenn der Anschlag und der zweite Schaltstangenteil einteilig ausgebildet sind und noch vorteilhafter, wenn der zweite Schaltkolben und der zweite Schaltstangenteil einteilig ausgebildet sind.

Einfach herstellbar und wenig Bauteile erfordernd ist es, wenn der erste Schaltzylinder und der zweite Schaltzylinder in einem Gehäuse angeordnet sind, das aus zwei koaxial miteinander verbundenen Zylindergehäusen besteht.

Ebenfalls wenige Bauteile sind erforderlich, wenn das erste Zylindergehäuse einteilig mit einem dazu koaxialen Schaltgehäuse ausgebildet ist, wobei der die Schaltgabel tragende Bereich der Schaltstange in den Innenraum des Schaltgehäuses ragt.

Zur sicheren axialen Führung ist vorzugsweise das erste Zylindergehäuse einteilig mit einem dazu koaxialen Schaltgehäuse ausgebildet, wobei der die Schaltgabel tragende Bereich der Schaltstange in den Innenraum des Schaltgehäuses ragt.

Ein Ausführungsbeispiel der Erfindung ist in der Zeichnung dargestellt und wird im Folgenden näher beschrieben. Es zeigen
- Figur 1: einen Längsschnitt eines Dreistellungsschaltmoduls in einer ersten Schaltstellung mit nicht druckbeaufschlagten Schaltzylinden
- Figur 2: einen Längsschnitt des Dreistellungsschaltmoduls nach Figur 1 in einer zweiten Schaltstellung mit druckbeaufschlagtem erstem Schaltzylinder und nicht druckbeaufschlagtem zweiten Schaltzylinder
- Figur 3: einen Längsschnitt des Dreistellungsschaltmoduls nach Figur 1 in einer dritten Schaltstellung mit druckbeaufschlagtem erstem und zweitem Schaltzylinder.

Das dargestellte Dreistellungsschaltmodul weist ein erstes Zylindergehäuse 2 mit einem ersten Schaltzylinder 1 auf, das einteilig mit einem dazu koaxialen Schaltgehäuse 3 ausgebildet ist.

An der dem Schaltgehäuse 3 abgewandten Seite ist koaxial an dem ersten Zylindergehäuse 2 ein zweites Zylindergehäuse 4 mit einem zweiten Schaltzylinder 5 angeordnet.

Das erste Zylindergehäuse 2 und das zweite Zylindergehäuse 4 weisen gleichen Außendurchmesser sowie der erste Schaltzylinder 1 und der zweite Schaltzylinder 5 gleiche Innendurchmesser auf, so daß diese etwa gleiche Druckwirkflächen aufweisen.

Auf der dem zweiten Zylindergehäuse 4 abgewandten Seite ist der erste Schaltzylinder 1 von einer Bodenwand 6 und auf der dem zweiten Zylindergehäuse 4 zugewandten Seite von einer Trennwand 7 axial begrenzt. Die Trennwand 7 bildet gleichzeitig eine Bodenwand des zweiten Schaltzylinders 5. Der zweite Schaltzylinder 5 ist auf seiner dem ersten Schaltzylinder 1 abgewandten Seite von einem Deckelverschluß 8 verschlossen, der eine konzentrische Lüftungsöffnung 9 nach außen aufweist.

Auf der dem zweiten Zylindergehäuse 4 abgewandten Seite schließt sich an das erste Zylindergehäuse 2 einteilig mit diesem ein Federgehäuse 10 mit einem koaxialen Innenraum 11 an, der an seinem dem ersten Schaltzylinder 1 abgewandten Ende von einem Deckel 12 verschlossen ist.

Ein erster Schaltstangenteil 17 einer Schaltstange 13 ist mit seinem rechten Ende in einer in dem Decke! 12 ausgebildeten, nach außen geschlossenen Führungsöffnung 14 axial verschiebbar geführt gelagert.

Mit seinem dem rechten Ende entgegengesetzten Endbereich ist der erste Schaltstangenteil 17 von einem ersten Dichtring 16 abgedichtet durch eine zweite Durchgangsöffnung 15 in der Bodenwand 6 verschiebbar geführt und ragt in den ersten Schaltzylinder 1.

Die Schaltstange 13 ist weiter mit radialem Spiel durch eine Koaxialöffnung 19 in der Trennwand 7 in den zweiten Schaltzylinder 5 geführt, wobei koaxial an dem linken Ende des ersten Schaltstangenteils 17 ein zweiter Schaltstangenteil 18 der Schaltstange 13 befestigt ist, der in den zweiten Schaltzylinder 5 ragt und an seinem dem Deckelverschluß 8 zugewandten Ende einen zweiten Schaltkolben 20 trägt.

Der zweite Schaltkolben 20 ist in dem zweiten Schaltzylinder 5 abgedichtet koaxial verschiebbar geführt und trennt den zweiten Schaltzylinder 5 in eine von dem Deckelverschluß 8 begrenzte Lüftungskammer 21 und eine über einen nicht dargestellten zweiten Druckanschluß mit einem pneumatischen Druck beaufschlagbare zweite Druckkammer 22,

Der in den ersten Schaltzylinder 1 hineinragende erste Schaltstangenteil 17 ist durch eine koaxiale erste Durchgangsöffnung 24 in einem ersten Schaltkolben 23 geführt. Dabei sitzt der erste Schaltkolben 23 über einen zweiten Dichtring 25 mit Reibschluß auf dem ersten Schaltstangenteil 17.

Der Schaltkolben 23 trennt den ersten Schaltzylinder 1 auf der dem Innenraum 11 zugewandten Seite in eine über einen nicht dargestellten ersten Druckanschluß mit einem pneumatischen Druck beaufschlagbare erste Druckkammer 26.

Das zweite Schaltstangenteil 18 weist an seinem mit dem ersten Schaltstangenteil 17 verbundenen Endbereich einen radial umlaufenden Kragen auf, der einen Anschlag 27 mit kleinerer radialer Erstreckung als der radialen Erstreckung der Koaxialöffnung 19 und größerer radialer Erstreckung als die radiale Erstreckung der ersten Durchgangsöffnung 24 bildet.

In dem Innenraum 11 des Federgehäuses 10 ist eine Schraubendruckfeder 28 angeordnet, die die Schaltstange 13 mit radialem Abstand umschließt und mit seinem einen Ende an der Bodenwand 6 abgestützt ist. Mit seinem anderen Ende beaufschlagt die Schraubendruckfeder 28 mit Vorspannung über einen die Schaltstange umschließenden Druckring 31 einen radial umlaufenden Kragen 30, der fest mit der Schaltstange 13 verbunden ist. Über den Kragen 30 wird die Vorspannung der Schraubendruckfeder 28 auf eine Schaltgabel 29 übertragen, die auf der Schaltstange 13 angeordnet ist. Durch die Schaltgabel ist z.B. ein Schaltgetriebe schaltbar.

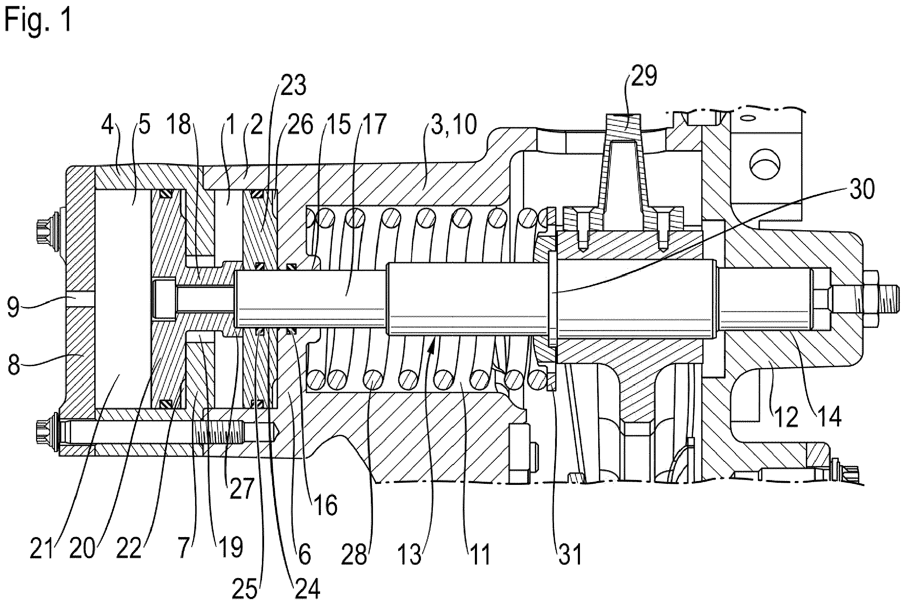

Unter der Wirkung der Schraubendruckfeder 28 befinden sich die beide Schaltkolben 20, 23 bei Nichtdruckbeaufschlagung in ihrer eingefahrenen Stellung und damit die Schaltstange 13 und die Schaltgabel 29 in einer ersten Schaltstellung (Figur 1), die z.B. ein Straßengang des Schaltgetriebes sein kann.

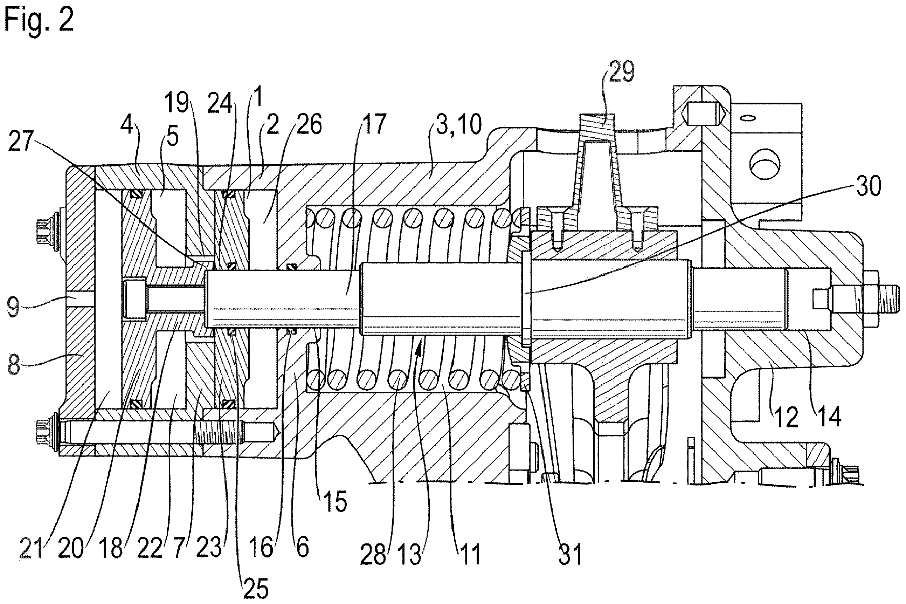

Erfolgt eine Druckbeaufschlagung des ersten Schaltzylinders 1 und damit des ersten Schaltkolbens 23, so bewegt dieser sich entgegen der Kraft der Schraubendruckfeder 28 in seine ausgefahrene Stellung, wobei er über den Anschlag 27 auch die Schaltstange 13 mit dem zweiten Schaltkolben 20 und damit die Schaltgabel 29 in ihre zweite Schaltstellung bewegt (Figur 2), die z.B. eine Neutralstellung des Schaltgetriebes sein kann.

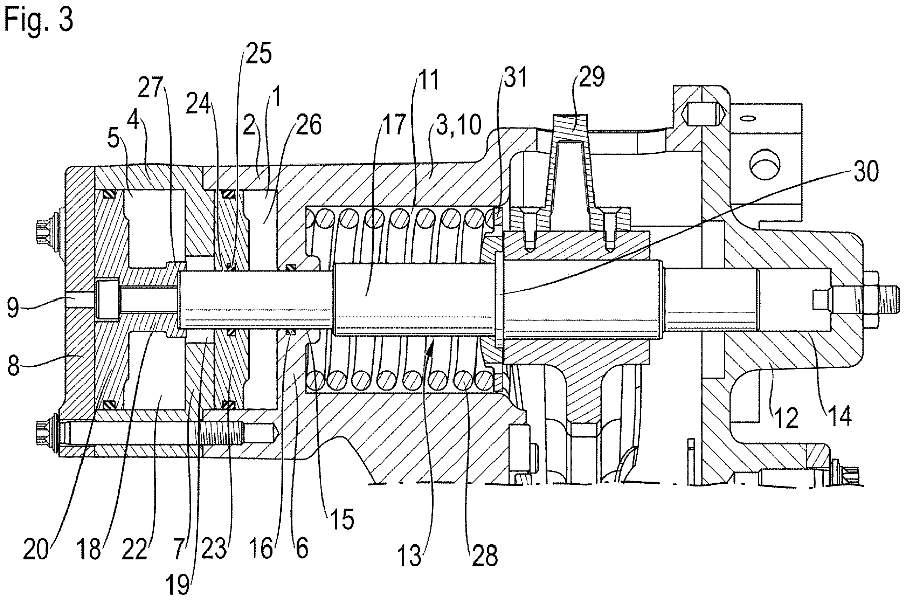

Erfolgt zusätzlich zur Druckbeaufschlagung des ersten Schaltkolbens 23 auch eine Druckbeaufschlagung des zweiten Schaltzylinders 5 und damit des zweiten Schaltkolbens 20, so wird dieser aus seiner zweiten Schaltstellung (Figur 2) sich weiter in seine ausgefahrene dritte Schaltstellung und damit auch die Schaltstange 13 und die Schaltgabel 29 in ihre dritte Schaltstellung bewegt (Figur 3), die z.B. ein Geländegang des Schaltgetriebes sein kann.

### Bezugszeichen

- 1: erster Schaltzylinder
- 2: erstes Zylindergehäuse
- 3: Schaltgehäuse
- 4: zweites Zylindergehäuse
- 5: zweiter Schaltzylinder
- 6: Bodenwand
- 7: Trennwand
- 8: Deckelverschluß
- 9: Lüftungsöffnung
- 10: Federgehäuse
- 11: Innenraum
- 12: Deckel
- 13: Schaltstange
- 14: Führungsöffnung
- 15: zweite Durchgangsöffnung
- 16: erster Dichtring
- 17: erster Schaltstangenteil
- 18: zweiter Schaltstangenteil
- 19: Koaxialöffnung
- 20: zweiter Schaltkolben
- 21: Lüftungskammer
- 22: zweite Druckkammer
- 23: erster Schaltkolben
- 24: erste Durchgangsöffnung
- 25: zweiter Dichtring
- 26: erste Druckkammer
- 27: Anschlag
- 28: Schraubendruckfeder
- 29: Schaltgabel
- 30: Kragen
- 31: Druckring

## Patentansprüche

1. Dreistellungsschaltmodul mit einer Schaltstange (13), die in eine erste, eine zweite und eine dritte Schaltstellung axial verschiebbar ist und auf der eine Schaltgabel (29) fest angeordnet ist, wobei die Schaltstange (13) von einem einseitig druckmittelbeaufschlagbaren ersten Schaltkolben (23) sowie von einem in gleiche Beaufschlagungsrichtung wie der erste Schaltkolben (23) einseitig druckmittelbeaufschlagbaren zweiten Schaltkolben (20) entgegen einer Federkraft axial bewegbar antreibbar ist und wobei der erste Schaltkolben (23) in einem ersten Schaltzylinder (1) und der zweite Schaltkolben (20) in einem zum ersten Schaltzylinder (1) koaxialen zweiten Schaltzylinder (5) verschiebbar angeordnet ist, **dadurch gekennzeichnet, daß** die Schaltkolben (20, 23) zumindest annähernd gleiche Druckwirkflächen aufweisen und der erste Schaltkolben (23) eine koaxiale Durchgangsöffnung (24) aufweist, mit der er abgedichtet axial verschiebbar auf der Schaltstange (13) geführt ist und die Schaltstange (13) eine koaxiale Öffnung (19) in einer den ersten Schaltzylinder (1) vom zweiten Schaltzylinder (5) trennenden Trennwand (7) durchragt, mit einem an der Schaltstange (13) in einem Abstand vom dem zweiten Schaltkolben (20) angeordneten Anschlag (27), dessen radiale Erstreckung kleiner als die radiale Erstreckung der koaxialen Öffnung (19) der Trennwand (7) und größer als die radiale Erstreckung der Durchgangsöffnung (24) des ersten Schaltkolbens (23) ist.

2. Dreistellungsschaltmodul nach Anspruch 1, **dadurch gekennzeichnet, dass** der erste Schaltzylinder (1) axial durch die Trennwand (7) und eine der Trennwand (7) in einem Abstand gegenüberliegende Bodenwand (6) begrenzt ist, die eine koaxiale zweite Durchgangsöffnung (15) aufweist, durch die die Schaltstange (13) abgedichtet verschiebbar hindurchgeführt ist.

3. Dreistellungsschaltmodul nach Anspruch 2, **dadurch gekennzeichnet, dass** eine vorgespannte Schraubendruckfeder (28) die Schaltstange (13) mit radialem Abstand umschließt, die mit ihrem einen Ende auf der dem erste Schaltzylinder (1) abgewandten Seite der Bodenwand (6) abgestützt ist und mit ihrem anderen Ende die Schaltgabel (29) oder die Schaltstange (13) kraftbeaufschlagt.

4. Dreistellungsschaltmodul nach einem der vorhergehenden Ansprüche, **dadurch gekennzeichnet, dass** die Schaltstange (13) aus einem ersten Schaltstangenteil (17) und einem damit koaxial verbundenen zweiten Schaltstangenteil (18) besteht, wobei der zweite Schaltstangenteil (18) den zweiten Schaltkolbenteil (20) trägt.

5. Dreistellungsschaltmodul nach Anspruch 4, **dadurch gekennzeichnet, dass** der Anschlag (27) an dem zweiten Schaltstangenteil (18) angeordnet ist.

6. Dreistellungsschaltmodul nach Anspruch 4, **dadurch gekennzeichnet, dass** der Anschlag (27) und der zweite Schaltstangenteil (18) einteilig ausgebildet sind.

7. Dreistellungsschaltmodul nach den Ansprüchen 4 bis 6, **dadurch gekennzeichnet, dass** der zweite Schaltkolben (20) und der zweite Schaltstangenteil (18) einteilig ausgebildet sind.

8. Dreistellungsschaltmodul nach einem der vorhergehenden Ansprüche, **dadurch gekennzeichnet, dass** der erste Schaltzylinder (1) und der zweite Schaltzylinder (5) in einem Gehäuse angeordnet sind, das aus zwei koaxial miteinander verbundenen Zylindergehäusen (2, 4) besteht.

9. Dreistellungsschaltmodul nach einem der vorhergehenden Ansprüche, **dadurch gekennzeichnet, dass** das erste Zylindergehäuse (2) einteilig mit einem dazu koaxialen Schaltgehäuse (3) ausgebildet ist, wobei der die Schaltgabel (29) tragende Bereich der Schaltstange (13) in den Innenraum (11) des Schaltgehäuses (3) ragt.
